# EUROPÄISCHE PATENTSCHRIFT

(11) **EP 2 871 346 B1**
(45) Veröffentlichungstag und Bekanntmachung des Hinweises auf die Patenterteilung: **27.07.2016**
(21) Anmeldenummer: 14002822.6
(22) Anmeldetag: 13.08.2014
(51) Int. Cl.: F02B 67/06, B60K 25/00, F02B 77/08, F16H 7/02, B60W 10/30, F16D 41/00, G01K 15/00

(54) **Verfahren und System zur Überwachung einer Freilaufriemenscheibe**
Method and system for monitoring a free-wheeling pulley
Procédé et système de surveillance d'une poulie à roue libre

(30) Priorität: 08.11.2013 AT 8582013
(43) Veröffentlichungstag der Anmeldung: 13.05.2015
(73) Patentinhaber: MAN Truck & Bus Österreich AG, 4400 Steyr (AT)
(72) Erfinder: Sakellaris, Christoph, 4451 Garsten (AT); Öhlinger, Christoph, 4594 Grünburg (AT)
(74) Vertreter: v. Bezold & Partner Patentanwälte - PartG mbB

(56) Entgegenhaltungen:
- EP-A1- 2 189 795
- WO-A1-98/50709
- DE-A1- 19 609 124
- JP-A- S57 105 525
- US-A1- 2009 198 403

## Beschreibung

Die Erfindung betrifft ein Verfahren zur Überwachung einer Freilaufriemenscheibe, insbesondere einer Freilaufriemenscheibe, die auf einer Antriebswelle eines von einer Kurbelwelle oder Zwischenantriebsrad angetriebenen Generators montiert ist. Ferner kann auch der gesamte Riementrieb auf Funktion geprüft werden.

Eine von einem Verbrennungsmotor angetriebene Kurbelwelle oder Zwischenantriebsrad wird bedingt durch das Viertaktprinzip ständig beschleunigt und abgebremst. Die resultierenden Schwingungen übertragen sich auch auf einen von der Kurbelwelle oder Zwischenantriebsrad angetriebenen Generator, was sich negativ auf das Geräuschverhalten und die Lebensdauer des Antriebsriemens und anderer Riementriebskomponenten auswirkt. Aus diesem Grund ist aus dem Stand der Technik bekannt, Generatoren von Fahrzeugen mit einer Freilaufriemenscheibe, auch Generatorfreilauf genannt, auszustatten. Die Freilaufriemenscheibe wird direkt auf die Antriebswelle des Generators montiert und überträgt die Antriebskraft nur in eine Drehrichtung. Damit entkoppelt sie den Generator von den Schwingungen der Kurbelwelle. Dank der Freilaufriemenscheibe läuft der Riementrieb ruhiger, leiser und die Lebensdauer des Antriebsriemens wird verlängert.

Aus der DE 196 09 124 A1 ist beispielsweise eine Riemengetriebevorrichtung für Motornebenaggregate mit einer Freilaufkupplung bekannt.

Bei einem Defekt derartiger Freilaufriemenscheiben treten jedoch große Wechselbelastungen an dem Generator auf und haben somit einen stark lebensdauerverkürzenden Einfluss auf den Generator und den gesamten Riementrieb. Es ist daher wünschenswert, eine Fehlfunktion der Freilaufriemenscheibe zeitnah zu erkennen.

Aus der EP 2 189 795 A1 ist eine Messanordnung zur Erfassung eines Riemenschlupfes eines Riementriebs bekannt. Der Riementrieb weist keine Freilaufriemenscheibe auf.

Es ist daher eine Aufgabe der Erfindung, ein Verfahren und System zur Überwachung derartiger Freilaufriemenscheiben bereitzustellen, mit denen eine defekte Freilaufriemenscheibe möglichst schnell erkannt und ausgetauscht werden kann, um weitere Defekte der Riementriebskomponenten, speziell der Generatoren, zu verhindern.

Diese Aufgabe wird jeweils durch ein Verfahren und ein System zur Überwachung einer Freilaufriemenscheibe mit den Merkmalen der unabhängigen Ansprüche gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Die Erfindung beruht auf der Feststellung, dass eine Fehlfunktion einer Freilaufriemenlaufscheibe im laufenden Betrieb an der sich ändernden Drehzahl des Generators festgestellt werden kann. Hierbei macht sich die Erfindung die Tatsache zu Nutze, dass die Freilauffunktion einer Freilaufriemenscheibe eine drehzahlerhöhende Wirkung am Generator erzeugt. Eine defekte Freilaufriemenscheibe führt zu einem Wegfall oder zumindest zu einer Reduzierung dieses drehzahlerhöhenden Effekts der Freilaufriemenscheibe und kann durch entsprechende Überwachung der Drehzahl des Generators erfasst werden.

Gemäß der vorliegenden Erfindung wird hierzu ein Verfahren zur Überwachung einer Freilaufriemenscheibe, die auf einer Antriebswelle eines Generators montiert ist und über einen Riementrieb von einer Kurbelwelle oder einem Zwischenantriebsrad angetrieben ist, vorgeschlagen. Der Generator kann die Lichtmaschine des Fahrzeugs sein. Das Verfahren umfasst die Schritte: Bestimmen einer Drehzahl des Generators und Feststellen einer Fehlfunktion der Freilaufriemenscheibe, falls die bestimmte Drehzahl des Generators die Solldrehzahl unterschreitet.

Vorzugsweise wird die Solldrehzahl des Generators in Abhängigkeit einer Drehzahl der Kurbelwelle bestimmt. Diese Solldrehzahl bei funktionierender Freilaufriemenscheibe ergibt sich aus dem Übersetzungsverhältnis zwischen Generator und Kurbelwelle und dem zusätzlichen durch die Freilaufriemenscheibe bedingten Erhöhungseffekt der Generatordrehzahl. Wird der Generator bzw. die Freilaufriemenscheibe von einem Zwischenantriebsrad angetrieben, kann alternativ die Solldrehzahl des Generators in Abhängigkeit einer Drehzahl des Zwischenantriebsrads bestimmt werden oder wiederum in Abhängigkeit der Drehzahl der Kurbelwelle unter Berücksichtigung einer etwaigen zusätzlichen Übersetzungsfunktion des Zwischenantriebsrads.

Dieser Solldrehzahlverlauf des Generators in Abhängigkeit der Kurbelwellendrehzahl oder des Zwischenantriebsrads kann beispielsweise vorab experimentell bestimmt und mittels einer entsprechenden Berechnungsfunktion oder Kennwerten bzw. Kennfeldern in einer Auswerteeinrichtung zur Durchführung des Verfahrens hinterlegt werden.

Bei manchen Fahrzeugen, insbesondere Nutzfahrzeugen, ist neben dem vorstehend genannten ersten Generator zusätzlich ein zweiter Generator, z. B. als zweite Lichtmaschine, vorgesehen. Auf der Antriebswelle des zweiten Generators ist gemäß dieser Variante ebenfalls eine Freilaufriemenscheibe montiert, nachfolgend bezeichnet als zweite Freilaufriemenscheibe, wobei die zweite Freilaufriemenscheibe über den Riementrieb mit der Freilaufriemenscheibe des Generators bewegungsgekoppelt ist. Mit anderen Worten wird der zweite Generator ebenfalls von der Kurbelwelle, die den ersten Generator antreibt, angetrieben, da beide Generatoren über denselben Riementrieb mit der Kurbelwelle gekoppelt sind.

In diesem Fall ist es beispielsweise möglich, die Solldrehzahl des ersten Generators in Abhängigkeit einer Drehzahl des zweiten Generators zu bestimmen. In Abhängigkeit des spezifischen Übersetzungsverhältnisses des zweiten Generators zur Kurbelwelle und der spezifischen Erhöhungsfunktion der zweiten Freilaufriemenscheibe am zweiten Generator ergibt sich ein vorbestimmtes festes Verhältnis zwischen den Umdrehungszahlen der Kurbelwelle und dem zweiten Generator und somit auch ein festes Verhältnis der Drehzahlen des ersten Generators und des zweiten Generators. Folglich kann eine Solldrehzahl für den Generator in Abhängigkeit der Drehzahl des zweiten Generators bestimmt werden. Weist nun einer dieser Generatoren eine Fehlfunktion auf, ändert sich das Verhältnis der Drehzahlen des ersten und zweiten Generators, so dass durch Vergleich der Drehzahlen der beiden Generatoren im laufenden Betrieb eine Fehlfunktion einer dieser Generatoren erkannt werden kann. Insbesondere weist dieser Generator eine Fehlfunktion auf, dessen Drehzahl unter den Wert gemäß der Solldrehzahl fällt.

Gemäß einem bevorzugten Ausführungsbeispiel wird eine Fehlfunktion der Freilaufriemenscheibe festgestellt, falls die bestimmte Drehzahl des Generators die vorbestimmte Solldrehzahl für einen vorbestimmten Zeitraum und/oder um einen vorbestimmten Schwellwert unterschreitet. Dadurch kann die Erkennungsgenauigkeit von Fehlfunktionen verbessert werden, da kurzzeitige Schwankungen oder zu geringe Abweichungen nicht zu einer Fehldiagnose führen.

Gemäß einem weiteren Aspekt der Erfindung wird eine Fehlfunktion festgestellt durch Ausgabe einer Warnung an einen Fahrzeuglenker, beispielsweise über das Fahrzeuginformationssystem oder durch einen Fehleintrag in das Fahrzeugdiagnosesystem. Dadurch wird sichergestellt, dass der Fahrer zeitnah auf einen Defekt und/oder eine Fehlfunktion der Freilaufriemenscheibe aufmerksam gemacht wird und diese schnell reparieren lassen kann, um weitere Defekte der Riemenantriebskomponenten, insbesondere der Generatoren, zu verhindern.

Die Erfindung betrifft ferner ein System zur Überwachung einer Freilaufriemenscheibe, die auf einer Antriebswelle eines Generators montiert ist und über einen Riementrieb von einer Kurbelwelle angetrieben ist. Das System umfasst eine Sensoreinrichtung, die ausgebildet ist, eine Drehzahl des Generators zu bestimmen und eine Auswerteeinrichtung, die ausgebildet ist, eine Solldrehzahl des Generators zu bestimmen und eine Fehlfunktion der Freilaufriemenscheibe festzustellen, falls die bestimmte Drehzahl des Generators die Solldrehzahl unterschreitet.

Vorzugsweise wird die Solldrehzahl des Generators in Abhängigkeit einer Drehzahl der Kurbelwelle bestimmt.

Gemäß einer weiteren Ausgestaltungsform ist die Sensoreinrichtung ausgebildet, eine Drehzahl eines zweiten Generators, umfassend eine zweite Freilaufriemenscheibe, die auf einer Antriebswelle des zweiten Generators montiert ist und die über den Riementrieb mit der Freilaufriemenscheibe des Generators bewegungsgekoppelt ist, zu bestimmen. Die Auswerteeinrichtung ist gemäß dieser Variante ausgebildet, die Solldrehzahl in Abhängigkeit einer Drehzahl des zweiten Generators zu bestimmen.

Weitere Einzelheiten und Vorteile der Erfindung werden im Folgenden unter Bezug auf die beigefügten Zeichnungen beschrieben. Es zeigen:
- Figur 1A: eine schematische Darstellung eines Riemenantriebs mit zwei Generatoren und zwei Freilaufriemenscheiben;
- Figur 1B: eine schematische Darstellung eines Riemenantriebs mit einem Generator und einer Freilaufriemenscheibe;
- Figur 2: einen Drehzahlverlauf eines Generators mit funktionierender vs. defekter Freilauffunktion;
- Figur 3: einen beispielhaften Hochlauf einer Motordrehzahl und der korrespondierenden Lichtmaschinendrehzahl mit funktionierendem vs. defekten Freilauf; und
- Figur 4: beispielhaft die Feststellung von Fehlfunktionen anhand von vorbestimmten Sollwerten der Generatordrehzahl.

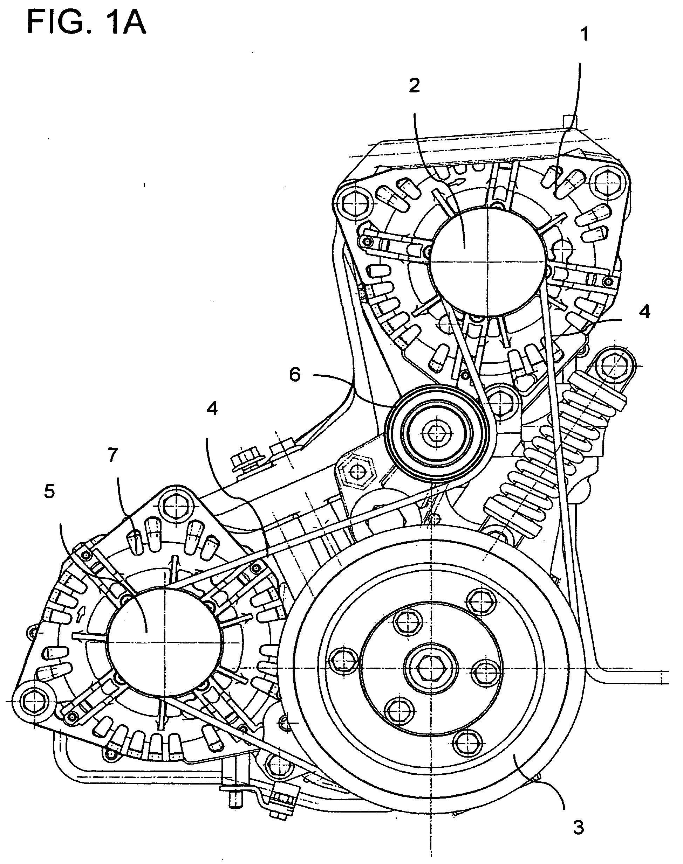

Figur 1A zeigt einen an sich bekannten Riemenantrieb, bei dem eine Lichtmaschine 1 über einen Antriebsriemen 4 von einer Antriebswelle 3 einer Kurbelwelle (nicht gezeigt) angetrieben wird. Auf der Antriebswelle der Lichtmaschine 1 ist eine Freilaufriemenscheibe 2 montiert, die das Antriebsmoment der Antriebswelle 3 auf die Antriebswelle der Lichtmaschine 1 überträgt.

Im vorliegenden Beispiel ist eine zweite Lichtmaschine 7 vorgesehen, auf deren Antriebswelle eine zweite Freilaufriemenscheibe 5 montiert ist, die ebenfalls über den Antriebsriemen 4 und eine Umlenkrolle 6 mit der Antriebsscheibe 3 der Kurbelwelle und der Freilaufriemenscheibe 2 bewegungsgekoppelt ist. Der Antriebsriemen treibt somit die Antriebswelle der zweiten Lichtmaschine 7 ebenfalls über die zweite Freilaufriemenscheibe 5 an.

Derartige Freilaufriemenscheiben 2 und 5 sind an sich aus dem Stand der Technik bekannt. Sie übertragen die Antriebskraft nur in einer Drehrichtung, wodurch der Generator von den Schwingungen der Kurbelwelle entkoppelt wird. Dadurch läuft der Riementrieb ruhiger, leiser und die Lebensdauer des Antriebsriemens kann verlängert werden. Zum Antrieb des Generators werden auf diese Weise nur die Beschleunigungsanteile der Kurbelwellendrehungleichförmigkeit genutzt.

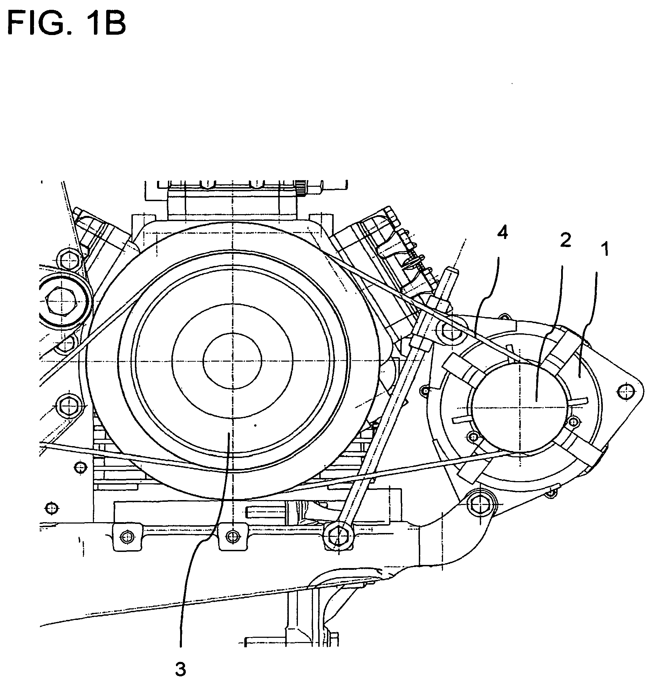

Figur 1B zeigt einen weiteren an sich bekannten Riemenantrieb, der sich von dem in der
Figur 1A gezeigten Beispiel dadurch unterscheidet, dass nur eine Lichtmaschine 1 und nur eine Freilaufriemenscheibe 2 vorgesehen ist.

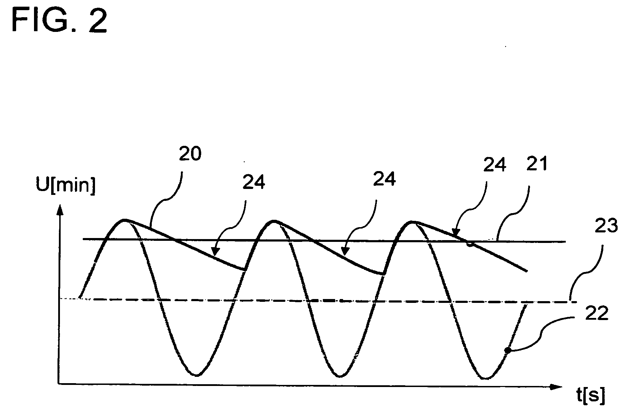

Figur 2 erläutert die Funktionsweise der Freilaufriemenscheibe 2 bzw. 5, die zum Antrieb des Generators im Wesentlichen nur die Beschleunigungsanteile der Kurbelwellendrehungleichförmigkeit nutzt.

Hierbei stellt die Schwellenfunktion 22 den tatsächlichen Drehzahlverlauf der Kurbelwelle dar und zeigt die für eine Kurbelwelle typische Drehungleichförmigkeit, bedingt durch das ständige Beschleunigen und Abbremsen der Kurbelwelle.

Die Schwellenfunktion 22 entspricht einer mittleren Drehzahl 23, die in Figur 2 durch die gestrichelte Linie dargestellt ist. Wird nun eine Freilaufriemenscheibe auf der Antriebswelle des Generators montiert, überträgt die Freilaufriemenscheibe die Antriebskraft der Kurbelwelle auf die Antriebswelle des Generators nur in eine Drehrichtung, so dass nur die Beschleunigungsteile der Kurbelwellendrehungsgleichförmigkeit genutzt werden, während der Freilauf in der Abbremsphase gleitet und diese abkürzt. Dies ist durch die abgeflachten Schenkel 24 in Figur 2 dargestellt. Dieser Effekt bewirkt somit eine Drehzahlerhöhung. Die durch die Freilaufriemenscheibe resultierende Schwellenfunktion 20 entspricht einer erhöhten mittleren Drehzahl 21 des Generators, auf dem die Freilaufriemenscheibe montiert ist.

In Kenntnis bzw. durch experimentelles Bestimmen dieses von der Freilaufriemenscheibe verursachten Drehzahlerhöhungseffekts kann die erwartete mittlere Drehzahl 21 des Generators bestimmt werden. Die mittlere Drehzahl entspricht der Sollfunktion der Generatordrehzahl bei einer funktionierenden Freilaufriemenscheibe. Wird nun diese mittlere Drehzahl 21 im laufenden Betrieb überwacht und sinkt die aktuelle mittlere Drehzahl 21 des Generators ab in Richtung oder auf den Wert der gestrichelten Linie 23, kann geschlussfolgert werden, dass ein Defekt der Freilaufriemenscheibe vorliegt.

Somit kann durch eine Bestimmung eines Sollwerts für die mittlere Drehzahl 21 des Generators und bei Feststellung von Abweichungen von diesem Sollwert eine Fehlfunktion der Freilaufriemenscheibe bestimmt werden.

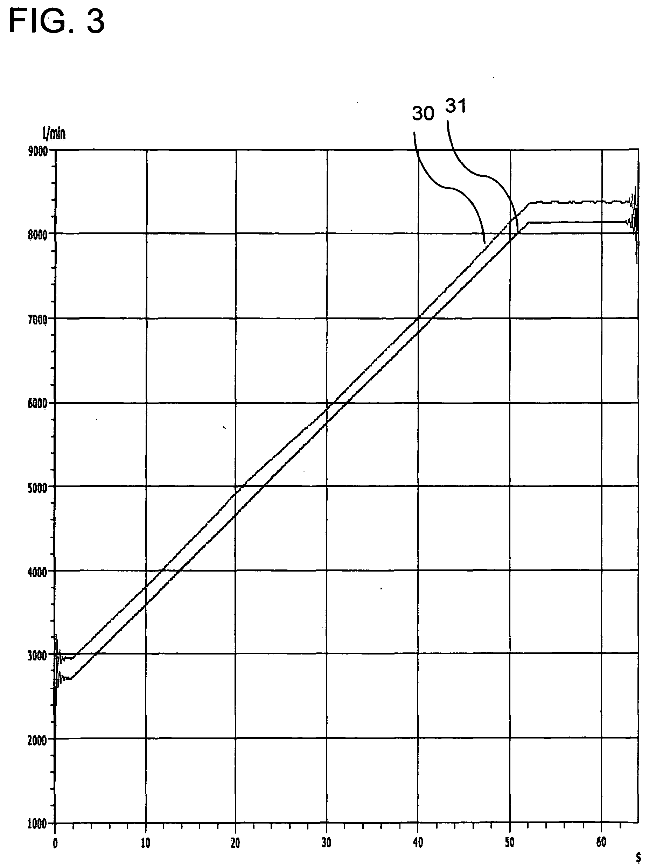

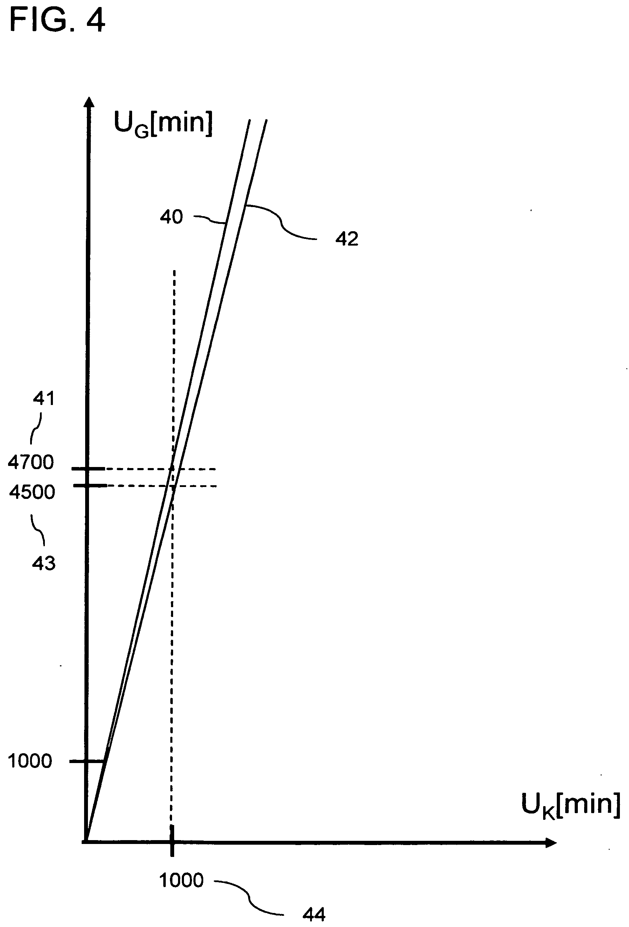

Dies ist nachfolgend in den Figuren 3 und 4 noch detaillierter erläutert. In Figur 3 ist beispielhaft eine Hochlaufkurve über die Zeit dargestellt, bei der eine Kurbelwellendrehzahl ausgehend von 600 bis auf 2100 Umdrehungen/Minute (U/min) erhöht wird. Beim Hochfahren der Kurbelwellendrehzahl wird der Verlauf der Generatordrehzahl, der auf der γ-Achse aufgetragen ist, bestimmt, und zwar einmal für eine Lichtmaschine mit funktionierenden Freiläufen 30 und einmal für eine Lichtmaschine mit defekten Freiläufen 31. Der in Figur 3 dargestellte Verlauf zeigt, dass die beiden Drehzahlverläufe klar unterscheidbar sind und dass ein defekter Freilauf zu einer entsprechend reduzierten Drehzahl der Lichtmaschine führt.

Die Figur 4 illustriert, wie eine Solldrehzahl des Generators, dessen Freilaufriemenscheibe überwacht werden soll, in Abhängigkeit der Drehzahl der Kurbelwelle bestimmt werden kann. Wie vorstehend erläutert, hängt die Drehzahl des Generators von der Drehzahl der Kurbelwelle ab. Im vorliegenden Beispiel besteht ein Übersetzungsverhältnis von 1 : 4,5 zwischen der Antriebsscheibe der Kurbelwelle und der Antriebswelle des Generators, so dass beispielsweise bei 1000 Umdrehungen der Kurbelwellenantriebsscheibe sich der Generator ohne Freilaufriemenscheibe mit 4500 Umdrehungen drehen würde. Dies ist beispielhaft durch die mit den Bezugszeichen 44 und 43 gekennzeichneten Werte und den Kurvenlauf 42 dargestellt.

Wie vorstehend erläutert, bewirkt die Freilauffunktion der Freilaufriemenscheibe einen zusätzlichen Drehzahlerhöhungseffekt, der im vorliegenden Beispiel bei Montieren einer Freilaufriemenscheibe auf die Antriebswelle des Generators die Drehzahl nochmals um 200 Umdrehungen/Minute erhöht. Im vorherigen Beispiel von 1000 Umdrehungen/Minute der Kurbelwelle umgibt sich somit eine erwartete Solldrehzahl von 4700 Umdrehungen/Minute des Generators. Dieser beispielhafte Sollwert des Generators ist mit dem Bezugszeichen 41 gekennzeichnet.

Somit gibt die Kurve, die mit dem Bezugszeichen 40 gekennzeichnet ist, die erwarteten Sollwerte für die Drehzahl des Generators an, die in Abhängigkeit einer Drehzahl der Kurbelwelle erwartet werden. Weist nun die Freilaufriemenscheibe 2 einen Defekt auf, werden die gemessenen Werte der Drehzahl des Generators 1 von der Sollkurve 40 abweichen, insbesondere unterhalb der Sollkurve 40 liegen und sich der Kurve 42 annähern oder auf der Kurve 42 liegen.

Die in Figur 4 ermittelte Sollkurve 40 für eine fehlerfreie Freilaufriemenscheibe kann beispielsweise anhand von Kennfeldern in der Überwachungseinheit des Fahrzeugs hinterlegt werden.

Eine Sensoreinrichtung zur Messung der aktuellen Drehzahl des Generators kann beispielsweise über die Drehzahlmessausgänge in gängigen Generatoren erfolgen. Gängige Generatoren weisen hierzu oftmals einen in der Regel unbelegten Pin zur Drehzahlermittlung auf, der zur Drehzahlermittlung ausgelesen werden kann.

Die ausgelesene Generatordrehzahl wird an ein Motorsteuergerät übermittelt, das ausgebildet ist, die aktuelle Generatordrehzahl bzw. Generatordrehzahlverlauf mit einer hinterlegten Solldrehzahl bzw. hinterlegten Solldrehzahlverlauf zu vergleichen. Stellt das Motorsteuergerät fest, dass die gemessenen Generatordrehzahl die Solldrehzahl länger als eine vorgestimmte Zeitdauer unterschreitet, gibt das Steuergerät eine Warnmeldung an den Fahrzeuglenker aus und/oder erzeugt einen Fehleintrag im Fahrzeugdiagnosesystem.

Zusammengefasst kann somit für jede Drehzahl der Kurbelwelle ein Sollwert für die Drehzahl des Generators bestimmt werden, der einer funktionierenden Freilaufriemenscheibe entspricht. Bei Abweichung des gemessenen Drehzahlwertes des Generators von dieser bestimmten Solldrehzahl, insbesondere wenn die gemessene Drehzahl unterhalb der gemessenen Solldrehzahl liegt, kann ein Defekt der Freilaufriemenscheibe festgestellt werden.

Obwohl die Erfindung unter Bezugnahme auf bestimmte Ausführungsbeispiele beschrieben worden ist, ist eine Vielzahl von Varianten und Abwandlungen möglich, die ebenfalls von dem Erfindungsgedanken Gebrauch machen und deshalb in den Schutzbereich fallen. Folglich soll die Erfindung nicht auf das offenbarte bestimmte Ausführungsbeispiel begrenzt sein, sondern die Erfindung soll alle Ausführungsbeispiele umfassen, die in den Bereich der beigefügten Patentansprüche fallen.

### Bezugszeichenliste

- 1: Generator, insbesondere Lichtmaschine
- 2: Freilaufriemenscheibe
- 3: Antriebsscheibe der Kurbelwelle
- 4: Antriebsriemen
- 5: Freilaufriemenscheibe
- 6: Umlenkrolle
- 7: zweiter Generator, insbesondere zweite Lichtmaschine
- 20: Drehzahlverlauf mit Freilaufriemenscheibe
- 21: mittlerer Drehzahlverlauf mit Freilaufriemenscheibe
- 22: Drehzahlverlauf ohne Freilaufriemenscheibe
- 23: mittlerer Drehzahlverlauf ohne Freilaufriemenscheibe
- 24: Kurvenverlauf der Generatordrehzahl mit Freilaufriemenscheibenvorrichtung während des Abbremsabschnittes der Kurbelwelle
- 30: Drehzahlverlauf mit Freilaufriemenscheibe
- 31: Drehzahlverlauf mit defekter Freilaufriemenscheibe
- 40: Drehzahlverlauf mit Freilaufriemenscheibe
- 41: Sollwert bei funktionierender Freilaufriemenscheibe
- 42: Drehzahlverlauf bei defekter Freilaufriemenscheibe
- 43: erwarteter Drehzahlwert bei defekter Freilaufriemenscheibe
- 44: Drehzahlwert der Kurbelwelle

## Patentansprüche

1. Verfahren zur Überwachung einer Freilaufriemenscheibe (2), die auf einer Antriebswelle eines Generators (1) montiert ist und über einen Riementrieb (4) von einer Kurbelwelle oder einem Zwischenantriebsrad angetrieben ist, umfassend die Schritte:
(a) Bestimmen einer Drehzahl des Generators (1);
(b) Bestimmen einer Solldrehzahl des Generators (1); und
(c) Feststellen einer Fehlfunktion der Freilaufriemenscheibe (2), falls die bestimmte Drehzahl des Generators (1) die Solldrehzahl (41) unterschreitet.

2. Verfahren nach Anspruch 1, **dadurch gekennzeichnet, dass** die Solldrehzahl (41) des Generators (1) in Abhängigkeit einer Drehzahl der Kurbelwelle oder des Zwischenantriebsrads bestimmt wird.

3. Verfahren nach Anspruch 1 oder 2, **dadurch gekennzeichnet, dass** die Solldrehzahl (41) des Generators (1) in Abhängigkeit von einem Übersetzungsverhältnis zwischen der Kurbelwelle bzw. dem Zwischenantriebsrad und dem Generator (1) und einem Drehzahlerhöhungseffekt der Freilaufriemenscheibe (2) bestimmt wird.

4. Verfahren nach Anspruch 1, **gekennzeichnet durch** den Schritt: Bestimmen einer Drehzahl eines zweiten Generators (7), umfassend eine zweite Freilaufriemenscheibe (5), die auf einer Antriebswelle des zweiten Generators (7) montiert ist und die über den Riementrieb (4) mit der Freilaufriemenscheibe (2) des Generators (1) bewegungsgekoppelt ist, wobei die Solldrehzahl des Generators (1) in Abhängigkeit von einer Drehzahl des zweiten Generators (7) bestimmt wird.

5. Verfahren nach einem der vorhergehenden Ansprüche, **dadurch gekennzeichnet, dass** die Fehlfunktion der Freilaufriemenscheibe (2) festgestellt wird, falls die bestimmte Drehzahl des Generators (1) die vorbestimmte Solldrehzahl für einen vorbestimmten Zeitraum und/oder um einen vorbestimmten Schwellwert unterschreitet.

6. Verfahren nach einem der vorhergehenden Ansprüche, **dadurch gekennzeichnet, dass** die Fehlfunktion der Freilaufriemenscheibe (2) festgestellt wird durch Ausgabe einer Warnung an einen Fahrzeuglenker oder durch einen Fehleintrag in das Fahrzeugdiagnosesystem.

7. Verfahren nach einem der vorhergehenden Ansprüche, **dadurch gekennzeichnet, dass** eine Freilaufriemenscheibe (2) eines Fahrzeugs, insbesondere eines Nutzfahrzeugs, überwacht wird.

8. System zur Überwachung einer Freilaufriemenscheibe (2), die auf einer Antriebswelle eines Generators (1) montiert ist und über einen Riementrieb (4) von einer Kurbelwelle oder einem Zwischenantriebsrad angetrieben ist, umfassend:
(a) eine Sensoreinrichtung, die ausgebildet ist, eine Drehzahl des Generators (1) zu bestimmen; und
(b) eine Auswerteeinrichtung, die ausgebildet ist, eine Solldrehzahl des Generators (1) zu bestimmen und eine Fehlfunktion der Freilaufriemenscheibe (2) festzustellen, falls die bestimmte Drehzahl des Generators (1) die Solldrehzahl unterschreitet.

9. System nach Anspruch 8, **dadurch gekennzeichnet, dass** die Solldrehzahl (41) des Generators (1) in Abhängigkeit einer Drehzahl der Kurbelwelle oder des Zwischenantriebsrads bestimmt wird.

10. System nach Anspruch 8, **dadurch gekennzeichnet,**
(a) **dass** die Sensoreinrichtung ausgebildet ist, eine Drehzahl eines zweiten Generators (7), umfassend eine zweite Freilaufriemenscheibe (5), die auf einer Antriebswelle des zweiten Generators (7) montiert ist und die über den Riementrieb (4) mit der Freilaufriemenscheibe (2) des Generators (1) bewegungsgekoppelt ist, zu bestimmen, und
(b) **dass** die Auswerteeinrichtung ausgebildet ist, die Solldrehzahl in Abhängigkeit einer Drehzahl des zweiten Generators (7) zu bestimmen.

11. Fahrzeug, insbesondere Nutzfahrzeug mit einem System nach einem der Ansprüche 8 bis 10.

## Claims

1. Method for monitoring a free-wheeling pulley (2) which is mounted on a drive shaft of a generator (1) and is driven via a belt drive (4) by a crankshaft or an intermediate drive gear, comprising the steps:
(a) determining a rotational speed of the generator (1);
(b) determining an intended rotational speed of the generator (1); and
(c) detecting a malfunction of the free-wheeling pulley (2) if the determined rotational speed of the generator (1) falls below the intended rotational speed (41).

2. Method according to Claim 1, **characterized in that** the intended rotational speed (41) of the generator (1) is determined as a function of a rotational speed of the crankshaft or of the intermediate drive gear.

3. Method according to Claim 1 or 2, **characterized in that** the intended rotational speed (41) of the generator (1) is determined as a function of a step-up transmission ratio between the crankshaft or the intermediate drive gear and the generator (1) and a rotational speed-increasing effect of the free-wheeling pulley (2).

4. Method according to Claim 1, **characterized by** the step: determining a rotational speed of a second generator (7) comprising a second free-wheeling pulley (5) which is mounted on a drive shaft of the second generator (7) and the movement of which is coupled to the free-wheeling pulley (2) of the generator (1) via the belt drive (4), wherein the intended rotational speed of the generator (1) is determined as a function of the rotational speed of the second generator (7).

5. Method according to one of the preceding claims, **characterized in that** the malfunction of the free-wheeling pulley (2) is detected if the determined rotational speed of the generator (1) falls below the predetermined intended rotational speed for a predetermined time period and/or by a predetermined threshold value.

6. Method according to one of the preceding claims, **characterized in that** the malfunction of the free-wheeling pulley (2) is confirmed by outputting a warning to a vehicle driver or by means of an error entry in the vehicle diagnostic system.

7. Method according to one of the preceding claims, **characterized in that** a free-wheeling pulley (2) of a vehicle, in particular of a utility vehicle, is monitored.

8. System for monitoring a free-wheeling pulley (2) which is mounted on a drive shaft of a generator (1) and is driven via a belt drive (4) by a crankshaft or an intermediate drive gear, comprising:
(a) a sensor device, which is designed to determine a rotational speed of the generator (1), and
(b) an evaluation device, which is designed to determine an intended rotational speed of the generator (1) and to detect a malfunction of the free-wheeling pulley (2) if the determined rotational speed of the generator (1) falls below the intended rotational speed.

9. System according to Claim 8, **characterized in that** the intended rotational speed (41) of the generator (1) is determined as a function of a rotational speed of the crankshaft or of the intermediate drive gear.

10. System according to Claim 8, **characterized**
(a) **in that** the sensor device is designed to determine a rotational speed of a second generator (7), comprising a second free-wheeling pulley (5) which is mounted on a drive shaft of the second generator (7) and the movement of which is coupled via the belt drive (4) to the free-wheeling pulley (2) of the generator (1), and
(b) **in that** the evaluation device is designed to determine the intended rotational speed as a function of a rotational speed of the second generator (7).

11. Vehicle, in particular utility vehicle, having a system according to one of Claims 8 to 10.

## Revendications

1. Procédé de surveillance d'une poulie à roue libre (2), qui est montée sur un arbre d'entraînement d'un générateur (1) et qui est entraînée par l'intermédiaire d'un entraînement à courroie (4) par un vilebrequin ou une roue d'entraînement intermédiaire, comprenant les étapes suivantes:
(a) déterminer une vitesse de rotation du générateur (1) ;
(b) déterminer une vitesse de rotation de consigne du générateur (1); et
(c) constater un fonctionnement défectueux de la poulie à roue libre (2), dans le cas où la vitesse de rotation déterminée du générateur (1) est inférieure à la vitesse de rotation de consigne (41).

2. Procédé selon la revendication 1, **caractérisé en ce que** l'on détermine la vitesse de rotation de consigne (41) du générateur (1) en fonction d'une vitesse de rotation du vilebrequin ou de la roue d'entraînement intermédiaire.

3. Procédé selon la revendication 1 ou 2, **caractérisé en ce que** l'on détermine la vitesse de rotation de consigne (41) du générateur (1) en fonction d'un rapport de réduction entre le vilebrequin ou la roue d'entraînement intermédiaire et le générateur (1) et un effet d'augmentation de la vitesse de rotation de la poulie à roue libre (2).

4. Procédé selon la revendication 1, **caractérisé par** l'étape suivante: déterminer une vitesse de rotation d'un deuxième générateur (7), comprenant une deuxième poulie à roue libre (5), qui est montée sur un arbre d'entraînement du deuxième générateur (7) et qui est couplée en mouvement avec la poulie à roue libre (2) du générateur (1) par l'intermédiaire de l'entraînement à courroie (4), dans lequel on détermine la vitesse de rotation de consigne du générateur (1) en fonction d'une vitesse de rotation du deuxième générateur (7).

5. Procédé selon l'une quelconque des revendications précédentes, **caractérisé en ce que** l'on constate le fonctionnement défectueux de la poulie à roue libre (2), dans le cas où la vitesse de rotation déterminée du générateur (1) est inférieure à la vitesse de rotation de consigne prédéterminée pendant une période de temps prédéterminée et/ou d'une valeur de seuil prédéterminée.

6. Procédé selon l'une quelconque des revendications précédentes, **caractérisé en ce que** l'on constate le fonctionnement défectueux de la poulie à roue libre (2) par émission d'un avertissement à un conducteur de véhicule ou par une inscription d'erreur dans le système de diagnostic du véhicule.

7. Procédé selon l'une quelconque des revendications précédentes, **caractérisé en ce que** l'on surveille une poulie à roue libre (2) d'un véhicule, en particulier d'un véhicule utilitaire.

8. Système de surveillance d'une poulie à roue libre (2), qui est montée sur un arbre d'entraînement d'un générateur (1) et qui est entraînée par l'intermédiaire d'un entraînement à courroie (4) par un vilebrequin ou une roue d'entraînement intermédiaire, comprenant:
(a) un dispositif de capteur, qui est configuré pour déterminer une vitesse de rotation du générateur (1); et
(b) un dispositif d'évaluation, qui est configuré pour déterminer une vitesse de rotation de consigne du générateur (1) et pour constater un fonctionnement défectueux de la poulie à roue libre (2), dans le cas où la vitesse de rotation déterminée du générateur (1) est inférieure à la vitesse de rotation de consigne.

9. Système selon la revendication 8, **caractérisé en ce que** la vitesse de rotation de consigne (41) du générateur (1) est déterminée en fonction d'une vitesse de rotation du vilebrequin ou de la roue d'entraînement intermédiaire.

10. Système selon la revendication 8, **caractérisé en ce que**
(a) le dispositif de capteur est configuré pour déterminer une vitesse de rotation d'un deuxième générateur (7), comprenant une deuxième poulie à roue libre (5), qui est montée sur un arbre d'entraînement du deuxième générateur (7) et qui est couplée en mouvement avec la poulie à roue libre (2) du générateur (1) par l'intermédiaire de l'entraînement à courroie (4); et
(b) le dispositif d'évaluation est configuré pour déterminer la vitesse de rotation de consigne en fonction d'une vitesse de rotation du deuxième générateur (7).

11. Véhicule, en particulier véhicule utilitaire, avec un système selon l'une quelconque des revendications 8 à 10.
